# EUROPÄISCHE PATENTANMELDUNG

(11) **EP 0 815 716 A1**
(43) Veröffentlichungstag der Anmeldung: **07.01.1998**
(21) Anmeldenummer: 97111227.1
(22) Anmeldetag: 03.07.1997
(51) Int. Cl.: A01C 23/02

(54) **Verfahren zur Bodenbearbeitung und Vorrichtung zur Durchführung des Verfahrens**

(30) Priorität: 03.07.1996 DE 19626652; 24.01.1997 DE 19702408
(71) Anmelder: Zunhammer, Sebastian, 83301 Traunreut (DE)
(72) Erfinder: Zunhammer, Sebastian, 83301 Traunreut (DE)

(57) **Zusammenfassung**

Die Erfindung bezieht sich auf ein Verfahren und eine Vorrichtung zur Bodenbear-beitung. Mit einer Bodenbearbeitungs-Vorrichtung (1) gemäß Figur 1 wird durch ein rotierendes Rollspatenmesser (6) der Ackerboden (3) aufgeschnitten, das aufge-wirbelte Erdreich zu einem zweiten rotierenden Rollspatenmesser (7) geschleudert und von diesem der geöffnete Ackerboden (3) wieder eingeebnet. Mit Hilfe eines Auslaufstutzens (11) wird Gülle (G) vor dem Einebnen des offenen Ackerbodens (3) auf diesem ausgebracht, mit ihm innig vermischt und vom eingeebneten Erdreich abgedeckt.

## Beschreibung

Die Erfindung bezieht sich auf ein Verfahren zum Aufbringen von Gülle auf Ackerboden und Einarbeiten der Gülle in dessen Oberfläche und eine Vorrichtung zur Durchführung des Verfahrens. Diese Vorrichtung ist ein Bodenbearbeitungsgerät zur Einarbeitung von Gülle in möglichst geringer Tiefe im Ackerboden.

Zur Einarbeitung von Gülle in den Oberflächenbereich eines Ackers sind bereits Verfahren und Bodenbearbeitungsgeräte bekannt. In der _{"}dlz", 11/89, Seiten 122 und 123 ist beschrieben, daß Gülle auf die Oberfläche des Ackerbodens aufgebracht und mittels einer nachlaufenden Scheibenegge in den Boden eingearbeitet werden kann. Derartige Bodenbearbeitungsgeräte sind in verschiedenen Arbeitsbreiten einsetzbar und erfordern je nach Arbeitsbreite einen mehr oder weniger hohen Kraftaufwand beim Einarbeiten der Gülle in den Ackerboden. Die dort beschriebene Scheibenegge hat eine Arbeitsbreite von vier Metern.

Aus der Praxis sind auch Geräte zum Aufreißen des Ackerbodens bekannt. Bei Arbeitsbreiten von 4,5m sind dann bereits Schlepperleistungen von ca. 150 kW erforderlich, so daß für derartige Bodenbearbeitungsgeräte entweder nur geringe Arbeitsbreiten oder enorme Schlepperleistungen notwendig sind. Ein weiterer Nachteil ist die relativ geringe Arbeitsgeschwindigkeit, so daß die Arbeitsleistung derartiger Bodenbearbeitungsgeräte verhältnismäßig stark begrenzt ist. Die Arbeitsleistung ist mit derartigen Geräten auch nicht mehr nennenswert zu steigern, da die Schlepperleistung nicht beliebig erhöht werden kann.

Das Aufbringen der Gülle auf die Oberfläche des Ackers und das anschließende Einarbeiten in den Ackerboden ist nicht mehr zeitgemäß, da die vollständige Ausnutzung ihrer Wertstoffe zur Düngung des Ackerbodens nicht gewährleistet ist und eine gewisse Geruchsbelästigung nicht vermeidbar ist.

Der Erfindung liegt daher die Aufgabe zu Grunde, ein Verfahren und eine Vorrichtung zur Bodenbearbeitung anzugeben, welche die vorgenannten Nachteile nicht aufweisen, die eine hohe Arbeitsgeschwindigkeit zulassen, eine bessere Ausnutzung der Gülle ermöglichen und Geruchsbelästigung durch die Gülle vermeiden.

Diese Aufgabe wird durch ein Verfahren mit den Merkmalen des Anspruches 1 gelöst, bei welchem ein Bodenbearbeitungsgerät, welches die Merkmale des Anspruches 2 aufweist, in besonders vorteilhafter Weise eingesetzt werden kann.

Durch die Merkmale der abhängigen Ansprüche wird das Bodenbearbeitungsgerät in besonders vorteilhafter Weise ausgestaltet.

Die Vorteile des erfindungsgemäßen Bodenbearbeitungsverfahrens und der dazu benutzten Vorrichtung liegen darin, daß hohe Arbeitsgeschwindigkeiten bei verhältnismäßig geringen Schlepperleistungen realisierbar sind, daß der Ackerboden nach Einbringung der Gülle wieder weitestgehend geschlossen und seine Oberfläche nahezu eingeebnet ist.

Anhand der Zeichnungen wird die Erfindung nachstehend mit Hilfe von Ausführungsbeispielen noch näher erläutert:

Es zeigt:
Figur 1 ein Bodenbearbeitungsgerät mit Schlepper und Verschlauchung schematisch dargestellt;
Figur 2 ein Bodenbearbeitungsgerät mit Schlepper und Gülleanhänger;
Figur 3 ein Bodenbearbeitungsgerät als Selbstfahrer mit Güllefaß;
Figur 4a ein Bodenbearbeitungsgerät in Seitenansicht;
Figur 4b eine Variante des Bodenbearbeitungsgerätes;
Figur 5 eine Einzelheit eines Bodenbearbeitungsgerätes in Draufsicht;
Figur 5a eine Seitenansicht einer weiterenVariante;
Figur 5b eine Draufsicht der Variante aus Figur 5a und
Figur 6 eine Einzelheit des Bodenbearbeitungsgerätes in Vorderansicht.

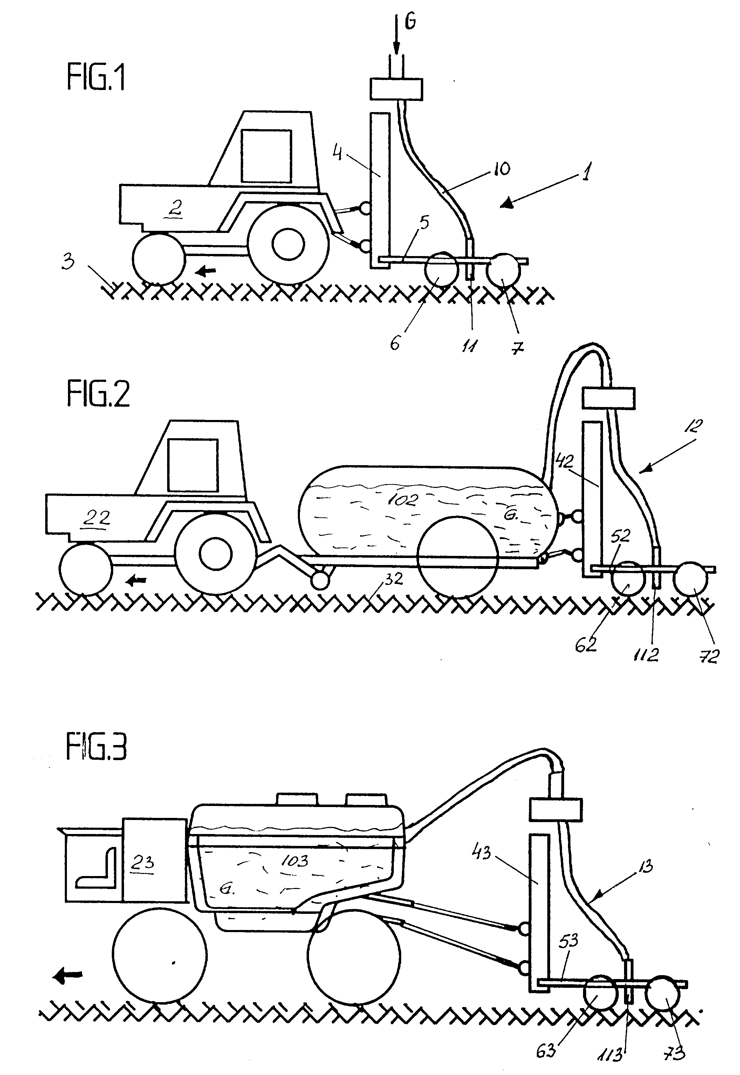

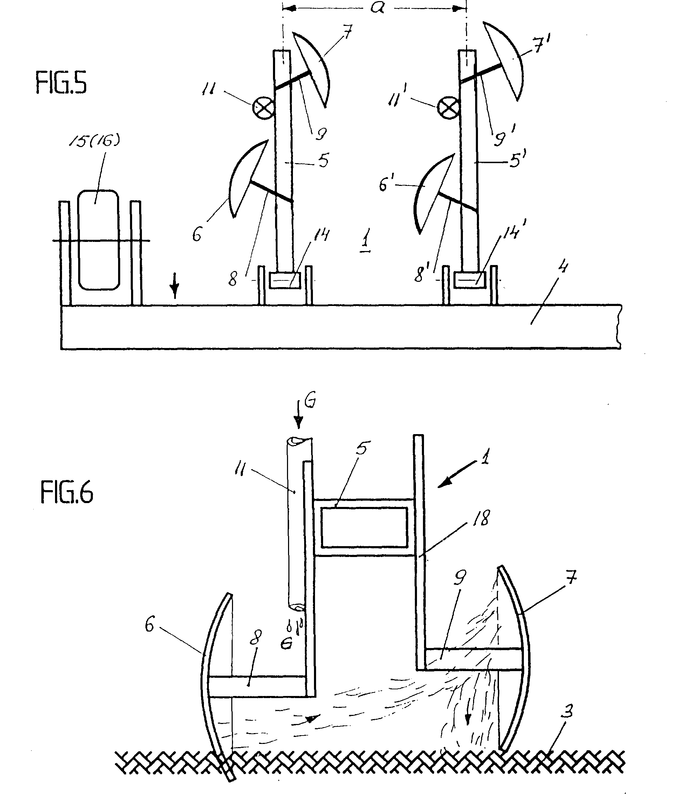

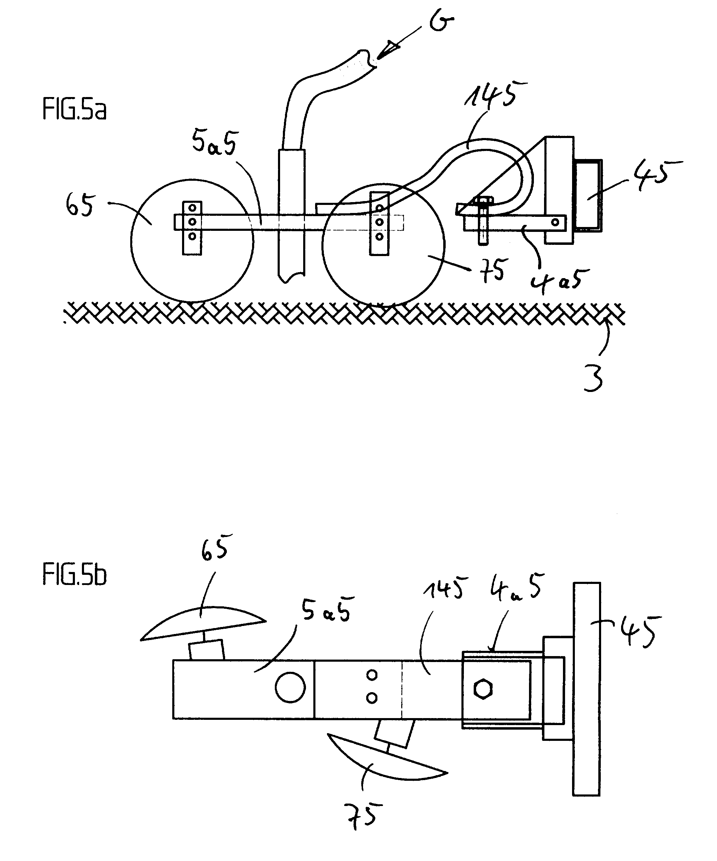

Ein in Figur 1 schematisch dargestelltes Bodenbearbeitungsgerät 1 wird von einem Schlepper 2 über einen zu bearbeitenden Acker 3 gezogen. Das Bodenbearbei-tungsgerät 1 weist einen Querträger 4 auf, an welchem sich ein oder mehrere Längsträger 5 befinden, die quer zur Fahrtrichtung voneinander beabstandet sind, was aus Figur 5 ersichtlich ist. Dieser gegenseitige Abstand a kann einstellbar sein, wobei dieser Abstand a stufenlos oder aber in einem vorab festgelegten Raster einstellbar ist, was anhand von Figur 5 ebenfalls später noch näher erläutert wird. Am Längsträger 5 befinden sich jeweils zwei Hohlscheiben 6 und 7, die den Längsträger 5 zwischen sich aufnehmen, wobei die konvex gewölbten Oberflächen der Hohlscheiben 6 und 7 vom Längsträger 5 wegweisen. An der konkav gewölbten Oberfläche der schüsselförmigen Hohlscheiben 6 und 7 weisen diese jeweils Lager 8 und 9 auf, mit denen sie drehbar am Längsträger 5 so befestigt sind, daß sie zu diesem einen spitzen Winkel einschließen, was ebenfalls später noch näher erläutert wird, da es für die weiteren Ausführungsbeispiele genauso gilt. Zwischen den Hohlscheiben 6 und 7 befindet sich ein Auslaufstutzen 11 für Gülle G, der mit Hilfe eines Schlauches 10 mit einem nicht dargestellten Güllebehälter verbunden ist. Die hier gezeigte Art der Gülleausbringung erfolgt also über eine sogenannte Verschlauchung.

In Figur 2 ist ein Ausführungsbeispiel dargestellt, bei welchem ein Gülleanhänger 102 an einen Schlepper 22 angekoppelt ist, und von diesem über einen Ackerboden 32 gezogen wird. Der Anhänger 102 weist an seinem vom Schlepper 22 abgewandten Ende ein Bodenbearbeitungsgerät 12 auf, welches in seinem Aufbau dem aus Figur 1 entspricht. Die relevanten Elemente sind jeweils mit dem gleichen Bezugszeichen versehen, wobei ihnen jedoch zur Unterscheidung die Figurenbezifferung als Index angehängt ist.

In Figur 3 ist ein sogenannter Selbstfahrer 23 gezeigt, welcher das Güllefahrzeug darstellt. Der Selbstfahrer 23 trägt ein Güllefaß 103, aus welchem Gülle G auf den Ackerboden 33 ausgebracht wird, was später noch näher erläutert werden wird. Dem Selbstfahrer 23 ist ein Bodenbearbeitungsgerät 13 angehängt, welches prinzipiell dem aus den vorbeschriebenen Ausführungsbeispielen entspricht.

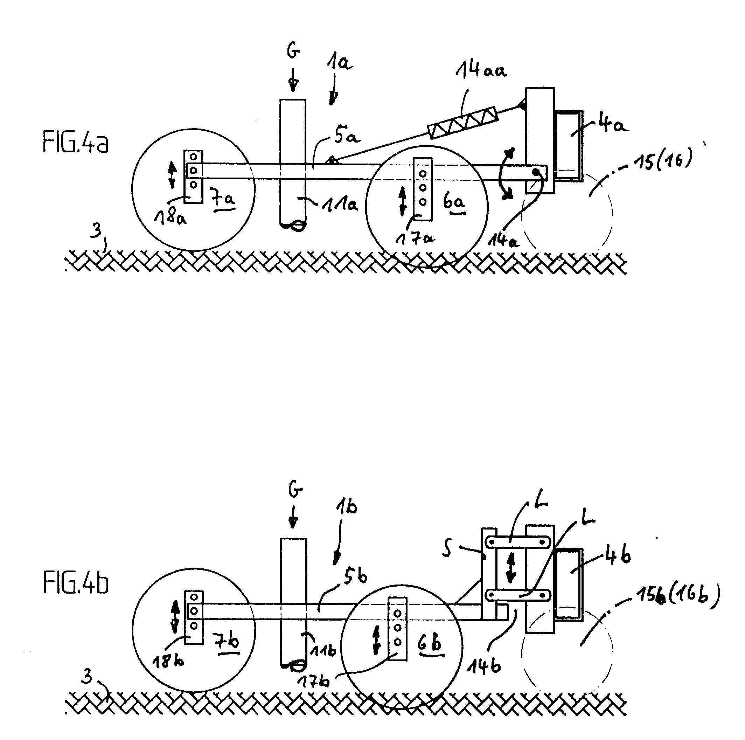

Figur 4a zeigt ein Bodenbearbeitungsgerät 1a gemäß Figur 1 in vergrößerter Seitenansicht, bzw. dessen relevanten Abschnitt, soweit er für die vorliegende Erfindung von Bedeutung ist. Der Querträger 4a ist geschnitten dargestellt und es ist an diesem ein Längsträger 5a montiert, der über ein Gelenk 14a so mit dem Querträger 4a verbunden ist, daß er senkrecht zur Oberfläche des Ackerbodens 3 schwenkbar ist. Diese Verschwenkbarkeit des Längsträgers 5a ermöglicht diesem, Steinen oder dergleichen auf dem Ackerboden 3 auszuweichen, so daß der Schlepperfahrer Bodenunebenheiten, Steine und andere auf dem Ackerboden 3 befindliche Gegenstände nicht beachten muß. Eine Druckfeder 14aa oder ein gleichartig wirkendes Element hält dabei den Längsträger 5a in Bodenkontakt, wobei bevorzugt mehere Längsträger 5a, 5a' nebeneinander vorgesehen sind.

Die Längsträger 5a, 5a' verlaufen parallel zur Fahrtrichtung, so daß die Hohlscheiben 6a und 7a aufgrund der schrägen Anbringung ihrer Lager 8a und 9a am Längsträger 5a auch zur Fahrtrichtung einen spitzen Winkel einschließen. Die Höhe der Längsträger 5a, die am Querträger 4a gelenkig angeflanscht sind, wird zum einen durch Höhenräder 15a und 16a bestimmt, welche am Querträger 4a befestigt sind und dessen Abstand zur Oberfläche des Ackerbodens 3 festlegen. Der Abstand des Querträgers 4a zur Oberfläche des Ackerbodens 3 ist so eingestellt, daß die in Fahrtrichtung betrachtet erste Hohlscheibe 6a geringfügig in den Ackerboden 3 eindringt, wobei die in Fahrtrichtung gesehen zweite Hohlscheibe 7a geringfügig oberhalb des Ackerbodens 3 angeordnet ist, bzw. diesen gerade tangiert. Eine weitere Möglichkeit, die Arbeitshöhe der Hohlscheiben 6a und 7a einzustellen besteht darin, sie am Längsträger 5a höhenverstellbar zu befestigen. Diese Höhenverstellung kann durch Verstellaschen 17a, 18a erfolgen, die in Figur 4 angedeutet sind und sich etwa im Zentrum der jeweiligen Hohlscheiben 6a, 7a befinden. Beide Möglichkeiten zur Höheneinstellung können beliebig kombiniert werden.

In Figur 4b ist eine Variante der vorbeschriebenen Vorrichtung gezeigt, die den Gegenstand der vorliegenden Erfindung darstellt. Zur besseren Übersicht sind gleichartige Bauelemente mit gleichen Grund-Bezugszeichen versehen, denen jeweils der entsprechende Index ,,a" bzw. ,,b" beigestellt ist. Der gravierende Unterschied zum Ausführungsbeispiel gemäß Figur 4a ist in der Ausgestaltung des Gelenkes 14b zu sehen. An den Längsträgern 5b sind vertikal verlaufende Streben S angeordnet. Mit Hilfe von parallel verlaufenden Laschen L sind die Längsträger 5b über die Streben S am Querträger 4b derart angelenkt, daß eine Parallelogramm-Aufhängung 14b als Gelenk gebildet wird. Die Parallelogramm-Aufhängung 14b ist bevorzugt federbelastet, so daß gewährleistet ist, daß die Längsträger 5b mit den Hohlscheiben 6b und 7b immer parallel zur Oberfläche des Ackerbodens 3 verlaufen. Die gemeinsame relative Lage der Hohlscheiben 6b und 7b zum Ackerboden 3 bleibt also für die vorderen und die hinteren Hohlscheiben 6b und 7b auch bei Vertikalbewegungen der Längsträger 5b erhalten. Die höhenmäßige Lagezuordnung der Längsträger 5b zur Oberfläche des Ackerbodens 3 wird also ausschließlich durch die Höhenverstellung festgelegt, wie es sinngemäß zum Ausführungsbeispiel gemäß Figur 4a weiter oben bereits beschrieben ist.

Beim Schleppen des Bodenbearbeitungsgerätes 1a, 1b über den Ackerboden 3 arbeitet die erste Hohlscheibe 6a, 6b nach Art eines Rollspatenmessers und gräbt den Ackerboden 3 durch seine rotierende Bewegung, der die Schleppbewegung in Fahrtrichtung des Schleppers 2 überlagert wird, schneidend auf. Dabei bekommt der aufgebrochene Ackerboden 3 einen gewissen Drall, wird gegen die zweite Hohlscheibe 7a, 7b geschleudert und durch deren rotierende Bewegung wieder auf die Oberfläche des Ackerbodens 3 geworfen. Die Rotation der zweiten Hohlscheibe 7a, 7b wird in gleicher Weise der Schleppbewegung des Schleppers 2 in Fahrtrichtung überlagert, so daß mittels der zweiten Hohlscheibe 7a, 7b der Ackerboden 3 wieder eingeebnet wird.

Zwischen den beiden Hohlscheiben 6a, 6b und 7a, 7b befindet sich ein Auslaufstutzen 11a, 11b der mittels einer Leitung 10a, 10b mit einem Güllevorratsbehälter verbunden ist. Dieser Güllevorratsbehälter ist in Figur 1 nicht dargestellt (Verschlauchung); in den Ausführungsbeispielen gemäß der Figuren 2 und 3 ist er mit dem Bezugszeichen 102 und 103 gekennzeichnet. Aufgrund eines entsprechenden Ansteuerbefehles wird während des Schleppens Gülle G über den Auslaufstutzen 11a, 11b ausgebracht. Da sich der Auslaufstutzen 11a, 11b zwischen den Hohlscheiben 6a, 6b und 7a, 7b befindet, läuft die Gülle G in die von der ersten Hohlscheibe 6a, 6b aufgeschnittene Furche im Ackerboden 3, welche anschließend von der zweiten Hohlscheibe 7a, 7b sofort wieder geschlossen wird.

Bei diesem Vorgang wird die Gülle G in optimaler Weise mit der aufgewirbelten Erde vermischt und in den Ackerboden 3 eingearbeitet. Es kann kaum Geruchsbelästigung entstehen, weil die Gülle G nicht verdunsten kann; ebenso gehen keine wertvollen Güllebestandteile als Dünger verloren, sondern die gesamten Nährstoffe der Gülle G bleiben dem Ackerboden 3 erhalten und die Umwelt wird nicht durch unangenehme Gerüche belästigt.

Da die Hohlscheiben 6a, 6b und 7a, 7b beim Schleppen rotieren, ist der Kraftaufwand zum Aufbrechen der Ackeroberfläche erheblich geringer, als beim Aufreißen durch Zinken, so daß der Zugkraft-Bedarf auch erheblich geringer ist, als beim sogenannten Grubbern

Praktische Versuche haben gezeigt, daß bei gleicher Schlepperleistung ein erfindungsgemäßes Bodenbearbeitungsgerät 1 mit doppelter Breite und doppelter Geschwindigkeit gefahren werden kann.Die Arbeitsleistung ist also vervierfacht, wobei das umweltfreundliche Einbringen der Gülle G und die geringere mechanische Beanspruchung der in den Ackerboden 3 eingreifenden Elemente 6a, 6b und 7a, 7b durch deren Rotation noch von besonderem Vorteil sind.

Eine in Figur 5 dargestellte Draufsicht zeigt das Bodenbearbeitungsgerät 1. In dieser Ansicht ist ein Abschnitt des Querträgers 4 erkennbar, an welchem in einem Abstand a zwei Längsträger 5, 5' mittels jeweils einem Gelenk 14, 14' gemäß dem Ausführungsbeispiel nach Figur 4a befestigt sind. In Richtung der Längserstreckung der Längsträger 5, 5' sind hintereinander zwei Lager 8, 9 bzw. 8', 9' angebracht, die von der Gelenkseite her gesehen einen stumpfen Winkel mit der Längsachse des Längsträgers 5, 5' bilden. An den freien Enden der Lager 8, 9 bzw. 8', 9' sind die Hohlscheiben 6, 7 bzw. 6', 7' drehbar befestigt. Ihre konkave Oberfläche ist dabei jeweils dem Längsträger 5, 5' zugewandt, den sie weitestgehend zentrisch zwischen sich aufnehmen. In Längsrichtung des Längsträgers 5, 5' ist jeweils zwischen den beiden Hohlscheiben 6, 7 bzw. 6', 7' ein Auslaufstutzen 11 bzw. 11' für Gülle vorgesehen, der mit einem Vorratsbehälter für Gülle verbunden ist, was aber hier nicht ausdrücklich dargestellt ist, da es aus den anderen Ansichten deutlich wird.

Der Abstand a ist in gewissen Grenzen frei wählbar und kann sowohl stufenlos als auch in bestimmten Rastermaßen verstellt werden. Die freie Wählbarkeit des Abstandsrasters begünstigt die universelle Einsetzbarkeit des Bodenbearbeitungsgerätes 1, da sie eine optimale Einstellung nach den gewünschten Erfordernissen ermöglicht.

Die vorbeschriebenen Einzelheiten gelten sinngemäß in gleicher Weise für die erfindungsgemäße Ausführungsform gemäß Figur 4b.

Figur 5a stellt eine weitere Variante des Bodenbearbeitungsgerätes dar. Anstelle der vorbeschriebenen Aufhängungen 14, 14a, 14b sind Längsträger 5a5 mittels Blattfedem 145 über einen Ausleger 4a5 mit einem Querträger 45 verbunden. Diese Art der Aufhängung mittels Feder 145 bewirkt, daß die Längsträger 5a5 feder-, dreh- und/oder verdrehelastisch mit dem zugeordneten Querträger 45 verbunden sind. Durch diese Maßnahme werden die Hohlscheiben 65 und 75 auch bei Kurvenfahrten nicht beschädigt.

Ferner kann der Längsträger 5a5 in einer Richtung senkrecht zum Boden 3 ausgelenkt werden. In Figur 5b ist die Draufsicht auf das Ausführungsbeispiel gemäß Figur 5a dargstellt, wobei die relevanten Elemente mit den gleichen Bezugszeichen versehen sind.

In Figur 6 sind stark schematisiert die beiden Rollspatenmesser 6 und 7 gezeigt,wobei in dieser Vorderansicht die Wirkung besser verdeutlicht werden soll. Das aufgewirbelte Erdreich des Ackerbodens 3 wird durch das rotierende Rollspatenmesser 6 gegen das ebenfalls rotierende zweite Rollspatenmesser 7 geschleudert und von diesem wieder auf die Oberfläche des Ackerbodens 3 geworfen, so daß das aufgewirbelte Erdreich vom zweiten Rollspatenmesser 7 wieder eingeebnet wird. Zwischen dem Arbeitsgang des Aufschneidens des Ackerbodens 3 durch das erste Rollspatenmesser 6 und das Wiedereinebnen durch das zweite Rollspatenmesser 7 wird durch den Auslaufstutzen 11 dem Ackerboden 3 Gülle G zugeführt. Die zugeführte Gülle G wird bei diesem Vorgang intensiv mit dem aufgewirbelten Erdreich vermischt, so daß sie optimal verteilt wird und ihre Bestandteile optimal genutzt werden. Da diese Vorgänge - Aufschneiden des Ackerbodens - Zuführen und Einbringen der Gülle - Vermischen der Gülle mit dem aufgewirbelten Erdreich Wiedereinebnen des Ackerbodens - praktisch in einem einzigen Arbeitsgang, d.h. während einer Schlepperfahrt pro Ackerzeile erfolgen, ist die Arbeitsersparnis ganz erheblich, vor allem, weil darüberhinaus die vierfache Arbeitsleistung bei gleicher Schlepperleistung erbracht werden kann.

Im Rahmen der Erfindung sind selbstverständlich konstruktive Variationen möglich. So liegt es im Ermessen des Konstrukteurs, die Lager nicht schräg unter einem von einem rechten Winkel abweichenden Winkel am Längsträger anzuordnen, sondern den rechten Winkel zu wählen. In diesem Fall kann dann der gesamte Längsträger schräg am Querträger angebracht werden, was die gleiche relative Ausrichtung der Hohlscheiben in Bezug auf die Schlepprichtung bedeutet. In gleicher Weise ist die symmetrische Anordnung der Hohlscheiben zum Längsträger keine zwingende Notwendigkeit, sondern die geometrische Anordnung kann in sinngemäßer Weise beliebig gewählt werden. Ferner ist es möglich, den Querträger gemeinsam mit den Längsträgern schräg zur Schlepprichtung anzuordnen.

Unter Ackerboden soll hier jegliche Art von Boden verstanden werden.

## Patentansprüche

1. Verfahren zum Aufbringen von Gülle auf Ackerboden und Einarbeiten der Gülle in dessen Oberfläche mittels mechanischem Eingriff während einer parallel zur Bodenoberfläche verlaufenden Bearbeitungsbewegung, mit einem Träger für eine Anzahl von Scheiben, die in die Oberfläche des Ackerbodens eingreifen, **dadurch gekennzeichnet,** daß die Scheiben als Rollspatenmesser in Form von Hohlscheiben (6) ausgebildet sind, die die Oberfläche des Ackerbodens (3) rotierend aufschneiden und dem aus dem aufgeschnittenen Ackerboden (3) aufgewirbelten Erdreich auf Grund ihrer schüsselartigen Form und ihrer Rotation einen Drall versetzen und gegen weitere als Hohlscheiben ausgebildete Rollspatenmesser (7) schleudern, welche den erstgenannten Rollspatenmessern (6) nachgeordnet sind, und die den aufgeschnittenen Ackerboden (3) wieder einebnen, wobei zwischen den Hohlscheiben (6 und 7) und vor dem Wiedereinebnen des Ackerbodens (3) Gülle (G) ausgebracht und mit dem lockeren Erdreich vermischt wird.

2. Vorrichtung zum Durchführen des Verfahrens nach Anspruch 1, **dadurch gekennzeichnet,** daß der Träger als Querträger (4 ) ausgebildet ist, an welchem eine Anzahl von Längsträgern (5, 5') angeordnet ist, die parallel zur Bearbeitungsrichtung und in einem Abstand (a) parallel zu sich selbst verlaufen, und daß die Längsträger (5, 5') jeweils wenigstens zwei in Bearbeitungsrichtung hintereinander angeordnete Rollspatenmesser in Form von Hohlscheiben (6, 7) aufweisen, die mittels Lagern (8, 9) derart am zu gehörigen Längsträger (5, 5') angebracht sind, daß sie diesen im Wesentlichen zentrisch zwischen sich aufnehmen, und daß ihre Rotationsachsen in einem stumpfen Winkel zur Längsachse des Längsträgers (5, 5') verlaufen, wobei sich zwischen den als Hohlscheiben (6, 7) ausgebildeten Rollspatenmessern ein Auslaufstutzen (11) für Gülle (G) befindet.

3. Vorrichtung nach Anspruch 2, **dadurch gekennzeichnet,** daß die Längsträger (5, 5') am Querträger (4) mittels Lagerungen (8, 9) derart angelenkt sind, daß sie senkrecht zur Oberfläche des Ackerbodens (3) auslenkbar sind.

4. Vorrichtung nach Anspruch 2, **dadurch gekennzeichnet,** daß die Lagerungen als Gelenke in Form von Parallelogramm-Aufhängungen (14b) ausgebildet sind.

5. Vorrichtung nach Anspruch 4, **dadurch gekennzeichnet,** daß die Parallelogramm-Aufhängungen (14b) durch den Querträger (4b) und senkrecht am Längsträger (5b) angeordnete Streben (S) gebildet wird, welche mittels zueinander paralleler Laschen (L) gelenkig miteinander verbunden sind.

6. Vorrichtung nach Anspruch 4, **dadurch gekennzeichnet,** daß die Längsträger (5b, 5b') am Querträger (4b) quer zur Bearbeitungsrichtung verschiebbar sind, wobei diese Verschiebung in festen Rasterschritten mit dem Rastermaß (a) oder stufenlos erfolgen kann.

7. Vorrichtung nach Anspruch 4, **dadurch gekennzeichnet,** daß der Auslaufstutzen (11b) sich zwischen den Rollspatenmessern (6b, 7b) befindet und mittels einer Leitung (10) mit einem Vorratsbehälter (102, 103) für Gülle (G) verbunden ist.

8. Vorrichtung nach Anspruch 2, **dadurch gekennzeichnet,** daß die Längsträger (5, 5') am Querträger (4) quer zur Bearbeitungsrichtung verschiebbar sind, wobei diese Verschiebung in festen Rasterschritten mit dem Rastermaß (a) oder stufenlos erfolgen kann.

9. Vorrichtung nach Anspruch 2, **dadurch gekennzeichnet,** daß der Auslaufstutzen (11) mittels einer Leitung (10) mit einem Vorratsbehälter (102, 103) für Gülle (G) verbunden ist.

10. Vorrichtung nach Anspruch 2, **dadurch gekennzeichnet,** daß die konkaven Oberflächen der Hohlscheiben (6, 7) jeweils dem Längsträger (5, 5') zugewandt sind, und daß sich ihre Rotationsachsen unter einem Winkel derart schneiden, daß die Hohlscheiben (6, 7) unter einem spitzen Winkel zur Längsachse der Längsträger (5, 5') verlaufen, wobei sich der Winkel zum Querträger (4) hin öffnet.

11. Vorrichtung nach Anspruch 2, **dadurch gekennzeichnet,** daß die Eindringtiefe des Rollspatenmessers (6) in den Ackerboden (3) bzw. der Abstand des Rollspatenmessers (7) vom Ackerboden (3) einstellbar ist.

12. Vorrichtung nach Anspruch 2, **dadurch gekennzeichnet,** daß die Lagerung (145) feder-, dreh- und /oder verdrehelastisch ausgebildet ist.

13. Vorrichtung nach Anspruch 12, **dadurch gekennzeichnet,** daß die Lagerung als Blattfeder (145) ausgebildet ist.
